# EUROPEAN PATENT SPECIFICATION

(11) **EP 4 417 729 B1**
(45) Date of publication and mention of the grant of the patent: **17.09.2025**
(21) Application number: 22880744.2
(22) Date of filing: 22.09.2022
(51) Int. Cl.: C23C 2/06, C21D 1/18, C21D 1/26, C23C 2/40, C21D 1/76, C21D 9/46, C21D 9/00, C22C 38/02, C21D 1/673, C22C 30/06, B32B 15/01, C22C 18/00, C22C 18/04, C22C 21/00, C22C 21/10, C22C 38/06, C22C 38/00, C22C 38/14, C23C 2/12, C23C 2/28

(54) **HOT STAMPED BODY**
WARMUMGEFORMTER KÖRPER
CORPS ESTAMPÉ À CHAUD

(30) Priority: 12.10.2021 JP 2021167251
(43) Date of publication of application: 21.08.2024
(73) Proprietor: NIPPON STEEL CORPORATION, Chiyoda-ku Tokyo 100-8071 (JP)
(72) Inventor: MITSUNOBU, Takuya, Tokyo 100-8071 (JP); HAYASHIDA, Shota, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2022/035441
(87) International publication number: WO 2023/063048

(56) References cited:
- WO-A1-2014/171417
- WO-A1-2021/039971
- WO-A1-2021/171517
- WO-A1-2021/171517
- CN-A- 108 950 160
- US-A1- 2020 002 798
- US-B2- 10 982 303

## Description

### [Technical Field of the Invention]

The present invention relates to a hot stamped body. The present application claims priority based on Japanese Patent Application No. 2021-167251 filed in Japan on October 12, 2021, the contents of which are incorporated herein by reference.

### [Related Art]

Hot stamping (hot pressing) is known as a technology for press forming a material that is difficult to form, such as a high strength steel sheet. Hot stamping is a hot forming technology in which a material to be formed is heated and then formed. In this technology, since the material is heated and then formed, the steel material is soft and has good formability at the time of forming. Therefore, it is known that even a high strength steel material can be accurately formed into a complicated shape, and the steel material after forming has sufficient strength because quenching is performed simultaneously with forming by a press die.

For example, Patent Document 1 describes, as a plated steel sheet for a hot stamped body, a steel sheet coated with a metal coating containing 2.0 to 24.0 wt% of zinc concentration, 7.1 to 12.0 wt% of silicon concentration, 1.1 to 8.0 wt% of magnesium concentration as an optional element, less than 0.3 wt% of an optional element concentration selected from Pb, Ni, Zr, or Hf, and the remainder aluminum and the impurity, and having an Al/Zn ratio of more than 2.9.

In addition, Patent Document 2 describes, as a method for manufacturing a hot stamped body, a method in which a steel sheet coated with a metal coating containing 2.0 to 24.0 wt% of zinc concentration, 7.1 to 12.0 wt% of silicon concentration, 1.1 to 8.0 wt% of magnesium concentration as an optional element, less than 0.3 wt% of an element concentration selected from Pb, Ni, Zr, or Hf as an optional element, and the remainder aluminum and the impurity and having an Al/Zn ratio of more than 2.9 is heated to 840 to 950°C, hot formed, and further cooled to obtain a part having steel made of martensite.
CN108950160A discloses a zinc-based coating thermoforming steel based on a CSP process.

### [Citation List]

### [Patent Document]

[Patent Document 1]
   PCT International Publication No. WO 2017/017513
[Patent Document 2]
   PCT International Publication No. WO 2017/017514

### [Summary of Invention]

### [Problems to be Solved by the Invention]

However, in Patent Documents 1 and 2, when a steel sheet is heated for hot stamping, Zn contained in a metal coating (plated layer) of the steel sheet is evaporated. Therefore, sacrificial corrosion resistance performance of the hot stamped product is deteriorated, and red rust resistance is deteriorated, which causes a problem that corrosion resistance after coating and coating adhesion are deteriorated.

The present invention has been made in view of the above circumstances, and an object thereof is to provide a hot stamped body excellent in corrosion resistance after coating and coating adhesion.

### [Means for Solving the Problem]

In order to solve the above problem, the present invention is as defined in claim 1. Preferred embodiments are defined in dependent claims.

### [Effects of the Invention]

According to the present invention, it is possible to provide a hot stamped body excellent in corrosion resistance after coating.

### [Embodiments of the Invention]

The present inventors have intensively studied a means for preventing evaporation of Zn from the plated layer of the heated plated steel sheet during hot stamping. A plated steel sheet in which a specific element was contained in a predetermined range in the plated layer and the surface of the plated layer was subjected to steam oxidation at the time of forming the plated layer was used as a blank. As a result, the present inventors have found that evaporation of Zn from the plated steel sheet during hot stamping is suppressed, and Zn can remain in the plated layer.

When the plated steel sheet is heated during hot stamping, the base metal of the steel sheet reacts with the constituent elements of the plated layer to form an alloy layer, and the alloy layer is modified by allowing the plating layer to contain a specific element within a predetermined range. As a result, the present inventors have found that coating film swell is less likely to occur when the corrosion resistance after coating is evaluated, and the corrosion resistance after coating and coating adhesion of the hot stamped body can be further improved.

Hereinafter, a hot stamped body excellent in corrosion resistance after coating and coating adhesion, a method for manufacturing a hot stamped body, and a method for manufacturing a plated steel sheet for hot stamping, which are embodiments of the present invention, is described.

First, a plated steel sheet for hot stamping, which is a material of the hot stamped body of the present embodiment, and a method for manufacturing the same is described.

A plated steel sheet for hot stamping includes a steel sheet and a plated layer formed on a surface of the steel sheet. The plated layer may be formed on one surface or both surfaces of the steel sheet.

The type of the steel sheet is not particularly limited. It may be determined by the product to be applied, the required strength, the sheet thickness, and the like. For example, a hot-rolled steel sheet described in JIS G3193: 2008 or a cold-rolled steel sheet described in JIS G3141: 2017 can be used.

The steel sheet is not particularly limited, but a steel sheet having a chemical composition containing 0.1 to 0.5% of C, 0.001 to 3% of Si, 0.3 to 3% of Mn, 0.0002 to 2% of Al, and Fe and the impurity as the remainder may be used. In the description of the chemical composition of the steel sheet, "%" means "mass%".

The plated layer has a chemical composition containing 0 to 70% of Al, 0 to 15% of Fe, 0 to 20% of Si, a C-group element, and the remainder: Zn and the impurity. Hereinafter, the reason for limitation of each element is described with respect to the chemical composition of the plated layer. In the description of the chemical composition of the plated layer, "%" means "mass%".

### Al: 0 to 70%

Al is an element that enhances the barrier property of the plated layer of the plated steel sheet for hot stamping, and is contained as necessary. In addition, Al reacts with the base metal of the steel sheet during hot stamping to form an alloy layer. The lower limit of the Al content is 0% or more. The upper limit of the Al content is 70% or less. If the Al content is more than 70%, the content of Zn is relatively reduced, so that Zn cannot remain in the plated layer after hot stamping, the sacrificial corrosion resistance of the plated layer is reduced, and the corrosion resistance after coating of the hot stamped body is reduced, which is not preferable. The lower limit of the Al content may be 20% or more or 30% or more. The upper limit of the Al content may be 65% or less or 60% or less.

### Fe: 0 to 15%

Fe may be contained in the plated layer of the plated steel sheet for hot stamping. Fe may be contained in the plated layer by diffusing from the steel sheet to the plated layer when the plated layer is formed by a hot-dip plating method. A part of Fe is alloyed by bonding with Al or the like of the plated layer. Furthermore, even in hot stamping, Fe diffuses from the steel sheet to the plated layer, and combines with Al or the like of the plated layer to form an alloy layer. The Fe content is 0% or more. The Fe content is 15% or less. If the Fe content is more than 15%, the Fe content in the plated layer after hot stamping becomes excessive, and red rust is likely to occur, which is not preferable. The lower limit of the Fe content in the plated layer of the plated steel sheet for hot stamping may be 1% or more or 2% or more. The upper limit of the Fe content may be 5% or less or 4% or less.

### Si: 0 to 20%

Si is an element having an effect of suppressing formation of an excessively thick alloy layer formed between the steel sheet and the plated layer to enhance adhesion between the steel sheet and the plated layer when the plated layer is formed on the steel sheet by a hot-dip plating method, and thus Si may be contained. In addition, Si is an element that forms a compound with Mg by being contained together with Mg and contributes to improvement of corrosion resistance after coating. The lower limit of the Si content is 0% or more. The lower limit of the Si content may be 1% or more or 2% or more. On the other hand, when the Si content is more than 20%, the workability of the plated layer is deteriorated, and a crack and the like may occur in the plated layer after hot stamping. Therefore, the Si content is 20% or less. The upper limit of the Si content may be 10% or less, and more preferably 5% or less.

In addition, the plated layer contains the following C-group element. These elements are more easily oxidized than Al, Fe, Si, and Zn, and an oxide is easily formed in the plated layer during hot stamping. It is presumed that by containing these elements in the plated layer, oxides of these elements suppress evaporation of Zn from the heated plated layer during hot stamping.

### C-group element (being any one kind or two kinds of Li and Y, the content of which is 0.00001 to 0.3% in total)

Also by containing the C-group element, evaporation of Zn during hot stamping can be suppressed. The content of the C-group element is 0.00001 to 0.3% in total. The total amount of the C-group element is more preferably 0.001 to 0.3%. The total amount of the C-group element may be 0.001% or more, 0.01% or more, or 0.2% or less, or 0.1% or less. When the content of the C-group element is less than the lower limit in total, the effect of suppressing Zn evaporation becomes insufficient. When the content of the C-group element exceeds the upper limit in total, the plated layer after hot stamping is excessively oxidized, so that corrosion resistance after coating and coating adhesion are deteriorated.

The plated layer may contain one kind or two kinds of the following A-group element and B-group element. Like the C-group element, these elements are more easily oxidized than Al, Fe, Si, and Zn, and an oxide is easily formed in the plated layer during hot stamping.

### A-group element (being 0.0010 to 15% of Mg and any one kind or two kinds of Ca or Sr, the content of which is 0.0001 % or more and less than 5.5% in total)

When the A-group element is contained, Mg and any one kind or two kinds of Ca or Sr are contained. That is, when the A-group element is contained, combinations of each element are Mg and Ca, Mg and Sr, and Mg, Ca, and Sr. This makes it possible to suppress evaporation of Zn during hot stamping. Furthermore, excellent coating adhesion can be obtained. The Mg content is preferably 0.0010 to 15%, and more preferably 1 to 15%. The Mg content may be 1% or more or 3% or more, and 14% or less or 10% or less. The total amount of any one kind or two kinds of Ca or Sr is preferably 0.0001% or more and less than 5.5%. The total amount of Ca and Sr may be 0.0002% or more, 0.01% or more, or 5% or less, or 4% or less. When the content of each element is less than the lower limit, the effect of suppressing Zn evaporation becomes insufficient. In addition, when the content of each element exceeds the upper limit, the plated layer after hot stamping is excessively oxidized, and corrosion resistance after coating is reduced.

### B-group element (being any one kind or two or more kinds of Zr, La, and Ce, the content of which is 0.0001 to 0.5% in total.)

Also by containing the B-group element, evaporation of Zn during hot stamping can be suppressed. Furthermore, excellent coating adhesion can be obtained. The content of the B-group elements is preferably 0.0001 to 0.5% in total. The total amount of the B-group elements may be 0.0002% or more, 0.01% or more, or 0.4% or less, or 0.3% or less. When the content of the B-group element is less than the lower limit in total, the effect of suppressing Zn evaporation becomes insufficient. In addition, when the content of the B-group elements exceeds the upper limit in total, the plated layer after hot stamping is excessively oxidized, and corrosion resistance after coating is reduced.

Further, the plated layer of the present embodiment may contain, in place of a part of Zn, any one kind or two or more kinds of 0 to 0.5% of Sb, 0 to 0.5% of Pb, 0 to 0.5% of B, 0 to 1.0% of Cu, 0 to 1.0% of Ti, 0 to 1.0% of Cr, 0 to 1.0% of Nb, 0 to 1.0% of Ni, 0 to 1.0% of Mn, 0 to 1.0% of Mo, 0 to 1.0% of Ag, 0 to 1.0% of Co, 0 to 1.0% of Sn, and 0 to 1.0% of Bi in the range of 0 to 5% in total. When these elements are more than 5% in total, the viscosity of the plating bath increases, and thus the initial make-up of the plating bath itself is often difficult, and a plated steel sheet having good plating properties cannot be manufactured.

Sb, Pb, and B are elements that can be added to the plated layer. When these elements are contained in the plated layer, an effect of improving the corrosion resistance of the flat portion of the plated layer before and after hot stamping is exhibited. The corrosion resistance of the flat portion refers to corrosion resistance of the plating surface of the plated layer. When the content is 0.001% or more, preferably 0.01% or more, or 0.1% or more, the effect of clearly improving corrosion resistance is confirmed, and therefore it is preferable to contain 0.001% or more of each of these elements. As long as these elements are contained in the range of 0.5% or less respectively, the viscosity of the plating bath does not increase, the initial make-up of the plating bath becomes possible, and a plated steel sheet having good plating properties can be manufactured.

Cu, Ti, Cr, Nb, Ni, Mn, Mo, Ag, and Co are metal elements that can be arbitrarily contained in the plated layer. When these elements are contained, an effect of improving the flat portion corrosion resistance of the plated layer before and after hot stamping is exhibited. When the content is 0.0001% or more, 0.001% or more, or 0.10% or more, the effect of clearly improving corrosion resistance is confirmed, and therefore it is preferable to contain 0.0001% or more of each of these elements. As long as these elements are contained in the range of 1.0% or less respectively, the viscosity of the plating bath does not increase, the initial make-up of the plating bath becomes possible, and a plated steel sheet having good plating properties can be manufactured.

Sn and Bi are elements that can be arbitrarily contained. When Sn and Bi are contained, sacrificial corrosion resistance of the plated layer before and after hot stamping is improved. When the content is 0.001% or more or 0.01% or more, the effect of improving the sacrificial corrosion resistance can be confirmed. However, the excessive content of Sn and Bi improves the sacrificial corrosion resistance of the plated layer, and as a result, the plated layer is more easily eluted, which adversely affects the corrosion resistance of the flat portion and the like. In addition, the external appearance of the plated layer is likely to change. Therefore, the contents of Sn and Bi are each 1.0% or less.

The remainder of the chemical composition of the plated layer is Zn and the impurity. Zn improves the sacrificial corrosion resistance of the plated steel sheet for hot stamping. Zn remains in the plated layer even after hot stamping, and forms an η-Zn phase or a Zn-containing phase in the plated layer of the hot stamped body. This improves the corrosion resistance after coating of the hot stamped body. Therefore, Zn is contained as the remainder. The content of Zn is not particularly limited as long as Zn is contained as the remainder, but the content of Zn may be 5% or more, and more preferably 8% or more.

The impurity refers to a component that is contained in a raw material or mixed in a manufacturing step and not intentionally contained. For example, a small amount of the impurity may be mixed into the plated layer due to mutual atomic diffusion between the steel sheet (base metal) and the plating bath.

In addition, the surface of the plated layer of the plated steel sheet for hot stamping of the present embodiment is subjected to steam oxidation treatment.

The adhesion amount of the plated layer of the plated steel sheet for hot stamping is preferably in the range of 20 to 160 g/m².

Next, a method for manufacturing a plated steel sheet for hot stamping is described. A method for manufacturing a plated steel sheet for hot stamping includes a hot-dip plating step and an exposure step.

In the hot-dip plating step, the steel sheet is immersed in a hot-dip plating bath prepared to have a predetermined chemical composition, and then pulled up to attach a molten metal constituting the plating bath to the steel sheet surface. Since the composition of the hot-dip plating bath is substantially the same as the composition of the plated layer to be formed, the composition may be adjusted according to the chemical composition of a desired plated layer. For example, the composition of the plating bath contains, in mass%, 0 to 70% of Al, 0 to 15% of Fe, 0 to 20% of Si, contains a C-group element, and further contains, in total, 0 to 5% in total of any one kind or two or more kinds of: 0 to 0.5% of Sb; 0 to 0.5% of Pb; 0 to 0.5% of B; 0 to 1.0% of Cu; 0 to 1.0% of Ti; 0 to 1.0% of Cr; 0 to 1.0% of Nb; 0 to 1.0% of Ni; 0 to 1.0% of Mn; 0 to 1.0% of Mo; 0 to 1.0% of Ag; 0 to 1.0% of Co; 0 to 1.0% of Sn; and 0 to 1.0% of Bi, and a remainder being of Zn and the impurity. Furthermore, the composition of the plating bath may further contain one kind, or two kinds of the A-group elements and the B-group elements described above.

The steel sheet may be subjected to reduction annealing prior to the hot-dip plating step. The annealing conditions may be known conditions, for example, heating to 750 to 900°C under a 5% H₂-N₂ gas atmosphere having a dew point of -10°C or higher and retaining it for 30 to 240 seconds.

Immediately after the steel sheet is pulled up from the plating bath, the adhesion amount of the plated layer may be adjusted by gas wiping with N₂ gas.

Next, in the exposure step, the plated layer during cooling after the hot-dip plating step is exposed for 3 to 300 seconds in an N₂ atmosphere containing H₂O and having a dew point of 0°C or higher. The exposure is performed while the temperature of the plated layer is in a temperature range of 700 to 460°C. The surface of the plated layer is subjected to steam oxidation by the exposure step. In particular, it is presumed that the A-group element, the B-group element, and the C-group element contained in the plated layer are preferentially oxidized by the exposure step. The average cooling rate while the plated layer is in the temperature range of 700 to 460°C is preferably in the range of 5 to 60°C/sec.

The exposure step is performed while the plated layer is in a temperature range of 700 to 460°C. If the exposure treatment is performed in a relatively high temperature state where the surface temperature of the plated layer is higher than 700°C, the plated layer is excessively oxidized. In addition, if the exposure treatment is performed in a state where the surface temperature of the plated layer is a relatively low temperature of less than 460°C, steam oxidation of the surface of the plated layer does not proceed, and evaporation of Zn cannot be suppressed during hot stamping.

The atmosphere in the exposure step is an N₂ atmosphere containing H₂O and having a dew point of 0°C or higher. When oxygen is present in the atmosphere, oxygen oxidation proceeds preferentially to steam oxidation, and as a result, evaporation of Zn cannot be suppressed during hot stamping. Therefore, the amount of oxygen contained in the atmosphere is equal to or less than the impurity level.

In addition, the dew point of the N₂ atmosphere containing H₂O is preferably 0°C or higher. If the dew point is lower than 0°C, steam oxidation on the surface of the plated layer does not sufficiently proceed, and evaporation of Zn cannot be suppressed during hot stamping. Since a higher dew point is more advantageous for steam oxidation, the upper limit of the dew point does not need to be particularly limited.

The exposure time is 3 to 300 seconds. If the exposure time is less than 3 seconds, steam oxidation on the surface of the plated layer does not sufficiently proceed, and evaporation of Zn cannot be suppressed during hot stamping. On the other hand, since the effect is saturated even if the exposure time is more than 300 seconds, the exposure time may be set to 300 seconds or less.

As described above, the plated steel sheet for hot stamping of the present embodiment is manufactured.

Next, a hot stamped body and a method for manufacturing a hot stamped body of the present embodiment is described.

A hot stamped body includes a steel material and a plated layer formed on a surface of the steel material. The plated layer may be formed on one surface or both surfaces of the steel material.

The type of the steel material is not particularly limited. It may be determined by the product to be applied, the required strength, the sheet thickness, and the like. For example, a hot-rolled steel sheet described in JIS G3193: 2008 or a cold-rolled steel sheet described in JIS G3141: 2017 can be used. The metallographic structure of the steel material contains a large amount of martensite microstructure by being rapidly cooled from a high temperature in the forming step by hot stamping.

As the steel material, a steel material having a chemical composition containing 0.1 to 0.5% of C, 0.001 to 3% of Si, 0.3 to 3% of Mn, 0.0002 to 2% of Al, and Fe and the impurity as the remainder may be used. In the description of the chemical composition of the steel sheet, "%" means "mass%".

The plated layer has a chemical composition containing 0 to 70% of Al, 10 to 60% of Fe, 0 to 20% of Si, a C-group element, and the remainder: Zn and the impurity. In addition, one kind, or two kinds of A-group elements and B-group elements may be further contained. Hereinafter, the reason for limiting the chemical composition of the plated layer is described. However, the reasons for limiting Al, Si, and the C-group element and the reasons for limiting elements such as Sb and Pb contained in place of a part of Zn are the same as the reasons described in the plated steel sheet for hot stamping. Therefore, in the following description, the reason for the limitation of Fe is described.

### Fe: 10 to 60%

Fe is contained in the plated layer of the plated steel sheet for hot stamping in a range of 0 to 15%. Then, by performing hot stamping on the plated steel sheet for hot stamping, Fe is further diffused from the steel sheet toward the plated layer, and 10% or more of Fe is contained in the plated layer after hot stamping. Fe diffused by hot stamping is bonded to Al or Zn contained in the plated layer together with Fe originally contained to form an alloy layer. By forming the alloy layer, corrosion resistance after coating of the hot stamped body can be improved as described later. On the other hand, when the amount of Fe is more than 60%, the red rust resistance of the hot stamped body is lowered, and the corrosion resistance after coating is lowered, which is not preferable. The lower limit of the Fe content may be 15% or more or 20% or more. The upper limit of the Fe content may be 50% or less or 40% or less.

### Remainder: Zn and impurity

The remainder consists of Zn and the impurity. Here, the impurity refers to a component contained in the raw material or a component mixed in the course of manufacturing, and is not intentionally contained in the plated steel sheet. The Zn content is not particularly limited, but the Zn content may be 5% or more, and more preferably 8% or more.

The plated layer of the hot stamped body contains an η-Zn phase or a Zn-containing phase. Examples of the Zn-containing phase include a ZnO phase. In addition, particularly when a A-group element is contained, Zn may be contained in the plated layer as an intermetallic compound phase with the A-group element, for example, an MgZn₂ phase, an Mg₂Zn₃ phase, an MgZn phase, a CaZn₁₁ phase, a CaZn₁₃ phase, a SrZn₁₁ phase, and a SrZn₁₃ phase. When the ZnO phase or the intermetallic compound phase of Zn and the A-group element is present, the chemical convertibility of the plated layer is improved. The η-Zn phase or the Zn-containing phase is located closer to the surface side of the plated layer than the position of 1/2 of the thickness of the plated layer. In addition, the η-Zn phase or the Zn-containing phase is distributed at the grain boundary of the alloy layer described later. By containing the η-Zn phase or the Zn-containing phase, sacrificial corrosion resistance is imparted to the plated layer of the hot stamped body, and corrosion resistance after coating is improved. In addition, red rust resistance is also improved.

The presence of the η-Zn phase or the Zn-containing phase can be confirmed by performing X-ray diffraction measurement on the surface of the plated layer of the hot stamped body and identifying the η-Zn phase or the Zn-containing phase from the X-ray diffraction pattern. Specifically, XRD measurement is performed on the surface of the plated layer using a Cu tube as an X-ray generation source, and when a peak is present at a position of 42.9 to 43.6° at 2θ, it is determined that the η-Zn phase is contained. In addition, for other Zn-containing phases, when a peak is present in the range of ± 0.3° from the peak of reflection with the highest strength in the ICDD card, it is determined that the Zn-containing phase is contained in the plated layer.

When Al is contained in the plated layer, the remainder in microstructure of the plated layer of the hot stamped body is an Fe-Al alloy layer in which Fe and Al in the plated layer are alloyed. The above-described η-Zn phase or Zn-containing phase is contained at the grain boundary of the grain forming the alloy layer. As described above, the intermetallic compound phase of Zn and the A-group element may be distributed on the surface layer of the plated layer (above 1/2 t part). The symbol t refers to the plating thickness. The Al content of the plated layer may be 0%, and when the Fe-Al alloy layer is not present, Fe is alloyed with Zn, and the η-Zn phase is present on the Fe-Zn alloy layer.

The adhesion amount of the plated layer of the hot stamped body is preferably in the range of 20 to 160 g/m².

The chemical composition of the plated layer of the plated steel sheet for hot stamping and the hot stamped body may be measured by the following method.

First, an acid solution is obtained by peeling and dissolving the plated layer with an acid containing an inhibitor that suppresses corrosion of base metal (steel material). Next, the chemical composition of the plated layer can be obtained by measuring the obtained acid solution by ICP analysis. The type of the acid is not particularly limited as long as it is an acid capable of dissolving the plated layer. The chemical composition is measured as the average chemical composition.

Since O cannot be analyzed by ICP analysis, the above chemical composition is a content of an element that does not consider the presence of O in the plated layer.

Next, a method for manufacturing the hot stamped body of the present embodiment is described.

The above-described plated steel sheet for hot stamping is cut into a predetermined shape to form a blank. Next, the blank is heated to a retention temperature of 850°C or higher, and the retention time at the retention temperature is set to 200 seconds or less. Then, the heated blank is formed in a die so as to have a desired shape, and is rapidly cooled in the die.

When it is heated to a retention temperature of 850°C or higher, Zn may be evaporated from the plated layer of the plated steel sheet for hot stamping. However, since the plated layer of the plated steel sheet for hot stamping contains a C-group element, evaporation of Zn is suppressed. In addition, since the C-group element is contained in the plated layer, the η-Zn phase or the Zn-containing phase is contained in the plated layer. In this way, the hot stamped body of the present embodiment is manufactured.

As described above, according to the method for manufacturing a plated steel sheet for hot stamping of the present embodiment, it is possible to produce a blank for a hot stamped body excellent in corrosion resistance after coating and coating adhesion. In addition, according to the hot stamped body of the present embodiment, corrosion resistance after coating and coating adhesion can be improved as compared with the prior art.

### [Examples]

Hereinafter, embodiments of the present invention are described.

As a steel sheet to be subjected to plating, a cold-rolled steel sheet (0.2% C-1.3% Mn) having a sheet thickness of 1.6 mm was prepared.

This steel sheet was cut into 100 mm × 200 mm, and then reduction annealing and hot-dip coating were continuously performed using a batch type hot-dip plating tester. The sheet temperature was measured using a thermocouple spot-welded to the central part of the plated base sheet.

In the reduction annealing, annealing was performed at 800°C for 120 seconds in a furnace having an oxygen concentration of 20 ppm or less under an atmosphere of a gas containing 5% of H₂ gas and the remainder being N₂.

After the reduction annealing, the steel sheet was air-cooled with N₂ gas, and immersed in a plating bath for about 3 seconds when the steel sheet temperature reached the bath temperature + 20°C. Then, the steel sheet was pulled up at a pulling speed of 20 to 200 mm/sec.

The composition of the plating bath contained, in mass%, 0 to 70% of Al, 0 to 15% of Fe, 0 to 20% of Si, and the above C-group element, and further contained, in total, 0 to 5% in total of any one kind or two or more kinds of: 0 to 0.5% of Sb; 0 to 0.5% of Pb; 0 to 0.5% of B; 0 to 1.0% of Cu; 0 to 1.0% of Ti; 0 to 1.0% of Cr; 0 to 1.0% of Nb; 0 to 1.0% of Ni; 0 to 1.0% of Mn; 0 to 1.0% of Mo; 0 to 1.0% of Ag; 0 to 1.0% of Co; 0 to 1.0% of Sn; and 0 to 1.0% of Bi, and a remainder being of Zn and the impurity. Furthermore, one kind or two kinds of the A-group elements and the B-group elements were additionally contained.

However, Nos. 1 to 33, 52 to 56, and 67 to 76 did not contain the C-group element. In Nos. 77 to 79, the content of the C-group element was out of the preferable range. In Nos. 80 to 87, the exposure step was not performed.

The plated base sheet on which the plated layer was formed was cooled after adjusting the adhesion amount of plating with N₂ wiping gas. At that time, as an exposure step, during cooling after hot-dip plating, the plated layer was exposed to an atmosphere described in Table 1B, Table 1D, and Table 1F while being in a temperature range of 700 to 460°C. The exposure time was in the range of 3 to 300 seconds. In Tables 1B, 1D, and 1F, "N₂ (dew point x°C)" means an N₂ atmosphere containing H₂O and having a dew point x°C. The average cooling rate while the plated layer was in the temperature range of 700 to 460°C was in the range of 5 to 60°C/sec.

Next, the resulting plated steel sheet was inserted into a muffle furnace in an air atmosphere set at 900°C, heated to 900°C, retained for 100 seconds, taken out, pressed with a flat sheet die, and subjected to hot stamping for rapid cooling to obtain a hot stamped body.

In the obtained hot stamped body, the presence or absence of the η-Zn phase or the Zn-containing phase in the plated layer was measured by the method described above. The results are shown in Tables 1A to 1F. In addition, Tables 1A to 1F show the composition of the plated layer of the hot stamped body.

The composition of the plated layer was measured by immersing a sample cut into 30 mm × 30 mm in a 10% HCl aqueous solution added with an inhibitor to pickle and peel off the plated layer, and then ICP analysis of elements eluted in the aqueous solution.

In addition, corrosion resistance after coating was evaluated for the hot stamped body.

Specifically, a sample of 50 × 100 mm was collected from the hot stamped body, subjected to Zn phosphoric acid treatment (SD5350 system: standard manufactured by Nippon Paint Industrial Coding Co., Ltd.), and then subjected to electrodeposition coating (PN110 POWERNICS (registered trademark) gray: Standard manufactured by Nippon Paint Industrial Coding Co., Ltd.) so as to have a thickness of 20 µm, baked at a baking temperature of 150°C for 20 minutes, and then a cut reaching the base metal was introduced at the center of the sample.

Thereafter, a composite cycle corrosion test according to JASO (M609-91) was conducted, and the number of cycles in which red rust was generated from the cut part was measured. "AA" was marked if the red rust generation cycle exceeded 120 cycles, "A" was marked if the red rust generation cycle was 60 to 120 cycles, and "B" was marked if the red rust generation cycle was less than 60 cycles. AA and A were regarded as acceptable, and B was regarded as unacceptable.

Furthermore, the coating adhesion to the hot stamped body was evaluated.

After the same treatment as corrosion resistance after coating was performed, the sample was immersed in a 5% sodium chloride aqueous solution at 55°C for 10 days, then taken out, and a tape made by Nichiban Co., Ltd. (product number: "CT405A-24") was attached onto the cut and immediately peeled off, and coating adhesion was evaluated from a coating film peeling width which is a length of a portion where the coating film was peeled off starting from a cut part. The sample was rated "AA" when the coating film peeling width was less than 1.5 mm, the sample was rated "A" when the coating film peeling width was 1.5 mm or more and less than 2 mm, and the sample was rated "B" when the coating film peeling width was 2 mm or more. AA and A were regarded as acceptable, and B was regarded as unacceptable.

As can be seen from Tables 1A to 1F, the hot stamped bodies (Nos. 1 to 33, Nos. 52 to 56) including the plated layer not containing a C-group element were excellent in corrosion resistance after coating, but inferior in coating adhesion. On the other hand, the hot stamped bodies (Nos. 34 to 51, Nos. 57 to 66) including the plated layer containing the C-group element were excellent in corrosion resistance after coating and coating adhesion. In particular, the hot stamped body in which the Mg content was 1% or more or the total amount of the C-group element was 0.001 to 0.3% was more excellent in corrosion resistance after coating. In addition, the hot stamped bodies containing one kind or two kinds of the A-group elements and the B-group elements (Nos. 57 to 66) were more excellent in corrosion resistance after coating. In Tables 1E and 1F, the hot stamped bodies (Nos. 67 to 76) having the plated layer not containing the C-group element, the hot stamped bodies (Nos. 77 to 79) having the plated layer in which the content of the C-group element was out of the preferable range, and the hot stamped bodies (Nos. 80 to 87) which was out of the range of the manufacture conditions without performing the exposure step were inferior in corrosion resistance after coating and coating adhesion. Furthermore, the hot stamped body (No. 87) in which the Y element was deposited on the plated layer was also poor in corrosion resistance after coating because the exposure step was not performed and the manufacture conditions were outside the range.

**[Table 1A]**

| No | Grouping | Plating composition (mass%) | | | | | | | | | | | |
|---|---|---|---|---|---|---|---|---|---|---|---|---|---|
| | | Zn | Al | Fe | Si | A-group | | | | B-group | | | |
| | | | | | | Mg | Ca | Sr | Ca+Sr | Zr | La | Ce | Total |
| 1 | Comparison example | Remainder | 0 | 30 | 0 | 14 | 5 | 0 | 5 | 0 | 0 | 0 | 0 |
| 2 | Comparison example | Remainder | 29 | 28 | 5 | 8 | 0.5 | 0 | 0.5 | 0 | 0 | 0 | 0 |
| 3 | Comparison example | Remainder | 41 | 39 | 3 | 1 | 0.3 | 0 | 0.3 | 0 | 0 | 0 | 0 |
| 4 | Comparison example | Remainder | 55 | 31 | 2 | 0.1 | 0.02 | 0 | 0.02 | 0 | 0 | 0 | 0 |
| 5 | Comparison example | Remainder | 70 | 21 | 0 | 0.001 | 0.0001 | 0 | 0.0001 | 0 | 0 | 0 | 0 |
| 6 | Comparison example | Remainder | 0 | 10 | 0 | 14 | 0 | 5 | 5 | 0 | 0 | 0 | 0 |
| 7 | Comparison example | Remainder | 17 | 14 | 5 | 8 | 0 | 0.4 | 0.4 | 0 | 0 | 0 | 0 |
| 8 | Comparison example | Remainder | 41 | 21 | 3 | 1 | 0 | 0.2 | 0.2 | 0 | 0 | 0 | 0 |
| 9 | Comparison example | Remainder | 50 | 25 | 2 | 0.1 | 0 | 0.01 | 0.01 | 0 | 0 | 0 | 0 |
| 10 | Comparison example | Remainder | 69 | 17 | 0 | 0.001 | 0 | 0.0001 | 0.0001 | 0 | 0 | 0 | 0 |
| 11 | Comparison example | Remainder | 0 | 14 | 0 | 14 | 4.6 | 0.4 | 5 | 0 | 0 | 0 | 0 |
| 12 | Comparison example | Remainder | 29 | 25 | 1 | 8 | 0.5 | 0.2 | 0.7 | 0 | 0 | 0 | 0 |
| 13 | Comparison example | Remainder | 33 | 22 | 1 | 12 | 1 | 0.1 | 1.1 | 0 | 0 | 0 | 0 |
| 14 | Comparison example | Remainder | 43 | 12 | 5 | 0.1 | 0.02 | 0.01 | 0.03 | 0 | 0 | 0 | 0 |
| 15 | Comparison example | Remainder | 70 | 11 | 5 | 0.01 | 0.0001 | 0.0001 | 0.0002 | 0 | 0 | 0 | 0 |
| 16 | Comparison example | Remainder | 10 | 60 | 5 | 0 | 0 | 0 | 0 | 0.5 | 0 | 0 | 0.5 |
| 17 | Comparison example | Remainder | 25 | 40 | 3 | 0 | 0 | 0 | 0 | 0.3 | 0 | 0 | 0.3 |
| 18 | Comparison example | Remainder | 45 | 21 | 2 | 0 | 0 | 0 | 0 | 0.02 | 0 | 0 | 0.02 |
| 19 | Comparison example | Remainder | 61 | 22 | 4 | 0 | 0 | 0 | 0 | 0.0001 | 0 | 0 | 0.0001 |
| 20 | Comparison example | Remainder | 14 | 10 | 0 | 0 | 0 | 0 | 0 | 0 | 0.4 | 0 | 0.4 |
| 21 | Comparison example | Remainder | 22 | 11 | 3 | 0 | 0 | 0 | 0 | 0 | 0.2 | 0 | 0.2 |
| 22 | Comparison example | Remainder | 41 | 18 | 19 | 0 | 0 | 0 | 0 | 0 | 0.01 | 0 | 0.01 |
| 23 | Comparison example | Remainder | 68 | 11 | 5 | 0 | 0 | 0 | 0 | 0 | 0.0001 | 0 | 0.0001 |
| 24 | Comparison example | Remainder | 21 | 21 | 3 | 0 | 0 | 0 | 0 | 0.3 | 0.2 | 0 | 0.5 |
| 25 | Comparison example | Remainder | 58 | 24 | 2 | 0 | 0 | 0 | 0 | 0.02 | 0.02 | 0 | 0.04 |
| 26 | Comparison example | Remainder | 70 | 12 | 5 | 0 | 0 | 0 | 0 | 0.0001 | 0.0001 | 0 | 0.0002 |
| 27 | Comparison example | Remainder | 0 | 56 | 0 | 0 | 0 | 0 | 0 | 0 | 0.4 | 0.1 | 0.5 |
| 28 | Comparison example | Remainder | 12 | 40 | 0 | 0 | 0 | 0 | 0 | 0 | 0.3 | 0.2 | 0.5 |
| 29 | Comparison example | Remainder | 39 | 15 | 3 | 0 | 0 | 0 | 0 | 0 | 0.02 | 0.02 | 0.04 |
| 30 | Comparison example | Remainder | 66 | 12 | 5 | 0 | 0 | 0 | 0 | 0 | 0.0001 | 0.0001 | 0.0002 |

| | | | | | | | | | | | | | |
|---|---|---|---|---|---|---|---|---|---|---|---|---|---|
| Underlined parts indicate that the sample is outside the scope of the invention or outside the preferred manufacture conditions. | | | | | | | | | | | | | |

**[Table 1B]**

| No | Grouping | Plating com | | | position (mass%) | | Adhesion amount | Manufacture conditions | η-Zn phase or Zn-containing phase or both | Performance | |
|---|---|---|---|---|---|---|---|---|---|---|---|
| | | C-group | | | other | | | | | Corrosion resistance after coating | Coating adhesion |
| | | Li | Y | Li+Y | Element | (mass%) | (g/m²) | Cooling gas atmosphere | | | |
| 1 | Comparison example | 0 | 0 | 0 | | | 67 | N₂ (dew point 0°C) | ○ | AA | B |
| 2 | Comparison example | 0 | 0 | 0 | Ni | 0.0001 | 71 | N₂ (dew point 0°C) | ○ | AA | B |
| 3 | Comparison example | 0 | 0 | 0 | | | 67 | N₂ (dew point 0°C) | ○ | AA | B |
| 4 | Comparison example | 0 | 0 | 0 | | | 64 | N₂ (dew point 0°C) | ○ | A | B |
| 5 | Comparison example | 0 | 0 | 0 | Bi | 0.001 | 64 | N₂ (dew point 0°C) | ○ | A | B |
| 6 | Comparison example | 0 | 0 | 0 | Sn | 0.001 | 50 | N₂ (dew point 0°C) | ○ | AA | B |
| 7 | Comparison example | 0 | 0 | 0 | | | 60 | N₂ (dew point 0°C) | ○ | AA | B |
| 8 | Comparison example | 0 | 0 | 0 | Cu | 0.01 | 60 | N₂ (dew point 0°C) | ○ | AA | B |
| 9 | Comparison example | 0 | 0 | 0 | | | 45 | N₂ (dew point 0°C) | ○ | A | B |
| 10 | Comparison example | 0 | 0 | 0 | Pb | 0.01 | 46 | N₂ (dew point 0°C) | ○ | A | B |
| 11 | Comparison example | 0 | 0 | 0 | Co | 0.0002 | 45 | N₂ (dew point 0°C) | ○ | AA | B |
| 12 | Comparison example | 0 | 0 | 0 | Sn | 0.005 | 44 | N₂ (dew point 0°C) | ○ | AA | B |
| 13 | Comparison example | 0 | 0 | 0 | Mn | 0.1 | 46 | N₂ (dew point 0°C) | ○ | AA | B |
| 14 | Comparison example | 0 | 0 | 0 | | | 50 | N₂ (dew point 0°C) | ○ | A | B |
| 15 | Comparison example | 0 | 0 | 0 | Ag | 0.02 | 65 | N₂ (dew point 0°C) | ○ | A | B |
| 16 | Comparison example | 0 | 0 | 0 | Nb | 0.01 | 45 | N₂ (dew point 0°C) | ○ | A | B |
| 17 | Comparison example | 0 | 0 | 0 | Cr | 0.01 | 66 | N₂ (dew point 0°C) | ○ | A | B |
| 18 | Comparison example | 0 | 0 | 0 | Mo | 0.02 | 20 | N₂ (dew point 0°C) | ○ | A | B |
| 19 | Comparison example | 0 | 0 | 0 | | | 44 | N₂ (dew point 0°C) | ○ | A | B |
| 20 | Comparison example | 0 | 0 | 0 | Ti | 0.01 | 55 | N₂ (dew point 0°C) | ○ | A | B |
| 21 | Comparison example | 0 | 0 | 0 | Bi | 0.004 | 90 | N₂ (dew point 0°C) | ○ | A | B |
| 22 | Comparison example | 0 | 0 | 0 | | | 160 | N₂ (dew point 0°C) | ○ | A | B |
| 23 | Comparison example | 0 | 0 | 0 | Sb | 0.002 | 45 | N₂ (dew point 0°C) | ○ | A | B |
| 24 | Comparison example | 0 | 0 | 0 | | | 65 | N₂ (dew point 0°C) | ○ | A | B |
| 25 | Comparison example | 0 | 0 | 0 | | | 65 | N₂ (dew point 0°C) | ○ | A | B |
| 26 | Comparison example | 0 | 0 | 0 | | | 45 | N₂ (dew point 0°C) | ○ | A | B |
| 27 | Comparison example | 0 | 0 | 0 | Ni | 0.0001 | 56 | N₂ (dew point 0°C) | ○ | A | B |
| 28 | Comparison example | 0 | 0 | 0 | | | 55 | N₂ (dew point 0°C) | ○ | A | B |
| 29 | Comparison example | 0 | 0 | 0 | | | 51 | N₂ (dew point 0°C) | ○ | A | B |
| 30 | Comparison example | 0 | 0 | 0 | Bi | 0.001 | 45 | N₂ (dew point 0°C) | ○ | A | B |

| | | | | | | | | | | | |
|---|---|---|---|---|---|---|---|---|---|---|---|
| Underlined parts indicate that the sample is outside the scope of the invention or outside the preferred manufacture conditions. | | | | | | | | | | | |

0

**[Table 1C]**

| No | Grouping | Plating composition (mass%) | | | | | | | | | | | |
|---|---|---|---|---|---|---|---|---|---|---|---|---|---|
| | | Zn | Al | Fe | Si | A-group | | | | B-group | | | |
| | | | | | | Mg | Ca | Sr | Ca+Sr | Zr | La | Ce | Total |
| 31 | Comparison example | Remainder | 16 | 35 | 1 | 0 | 0 | 0 | 0 | 0.3 | 0.1 | 0.1 | 0.5 |
| 32 | Comparison example | Remainder | 48 | 12 | 5 | 0 | 0 | 0 | 0 | 0.02 | 0.02 | 0.02 | 0.06 |
| 33 | Comparison example | Remainder | 67 | 13 | 5 | 0 | 0 | 0 | 0 | 0.0001 | 0.0001 | 0.0001 | 0.0003 |
| 34 | Example | Remainder | 0 | 41 | 2 | 0 | 0 | 0 | 0 | 0 | 0 | 0 | 0 |
| 35 | Example | Remainder | 19 | 15 | 1 | 0 | 0 | 0 | 0 | 0 | 0 | 0 | 0 |
| 36 | Example | Remainder | 65 | 13 | 5 | 0 | 0 | 0 | 0 | 0 | 0 | 0 | 0 |
| 37 | Example | Remainder | 0 | 34 | 2 | 0 | 0 | 0 | 0 | 0 | 0 | 0 | 0 |
| 38 | Example | Remainder | 23 | 10 | 3 | 0 | 0 | 0 | 0 | 0 | 0 | 0 | 0 |
| 39 | Example | Remainder | 46 | 15 | 20 | 0 | 0 | 0 | 0 | 0 | 0 | 0 | 0 |
| 40 | Example | Remainder | 70 | 12 | 5 | 0 | 0 | 0 | 0 | 0 | 0 | 0 | 0 |
| 41 | Example | Remainder | 0 | 60 | 0 | 0 | 0 | 0 | 0 | 0 | 0 | 0 | 0 |
| 42 | Example | Remainder | 21 | 18 | 3 | 0 | 0 | 0 | 0 | 0 | 0 | 0 | 0 |
| 43 | Example | Remainder | 38 | 30 | 1 | 0 | 0 | 0 | 0 | 0 | 0 | 0 | 0 |
| 44 | Example | Remainder | 70 | 11 | 5 | 0 | 0 | 0 | 0 | 0 | 0 | 0 | 0 |
| 45 | Example | Remainder | 29 | 21 | 3 | 0 | 0 | 0 | 0 | 0 | 0 | 0 | 0 |
| 46 | Example | Remainder | 32 | 22 | 2.5 | 0 | 0 | 0 | 0 | 0 | 0 | 0 | 0 |
| 47 | Example | Remainder | 31 | 20 | 5 | 0 | 0 | 0 | 0 | 0 | 0 | 0 | 0 |
| 48 | Example | Remainder | 29 | 21 | 5 | 0 | 0 | 0 | 0 | 0 | 0 | 0 | 0 |
| 49 | Example | Remainder | 30 | 19 | 2 | 0 | 0 | 0 | 0 | 0 | 0 | 0 | 0 |
| 50 | Example | Remainder | 32 | 20 | 3 | 0 | 0 | 0 | 0 | 0 | 0 | 0 | 0 |
| 51 | Example | Remainder | 30 | 18 | 3 | 0 | 0 | 0 | 0 | 0 | 0 | 0 | 0 |
| 52 | Comparison example | Remainder | 0 | 54 | 0 | 14 | 5 | 0.4 | 5.4 | 0 | 0.0001 | 0.0001 | 0.0002 |
| 53 | Comparison example | Remainder | 22 | 20 | 0 | 8 | 0.5 | 0.2 | 0.7 | 0.1 | 0.1 | 0.01 | 0.21 |
| 54 | Comparison example | Remainder | 35 | 31 | 0 | 3 | 0.3 | 0.1 | 0.4 | 0.1 | 0.1 | 0.3 | 0.5 |
| 55 | Comparison example | Remainder | 52 | 19 | 2 | 0.1 | 0.02 | 0.01 | 0.03 | 0.02 | 0.02 | 0.02 | 0.06 |
| 56 | Comparison example | Remainder | 66 | 10 | 15 | 0.001 | 0.0001 | 0.0001 | 0.0002 | 0.0001 | 0.0001 | 0.0001 | 0.0003 |
| 57 | Example | Remainder | 0 | 51 | 0 | 14 | 5 | 0.4 | 5.4 | 0 | 0 | 0 | 0 |
| 58 | Example | Remainder | 15 | 12 | 0 | 8 | 0.5 | 0.2 | 0.7 | 0 | 0 | 0 | 0 |
| 59 | Example | Remainder | 24 | 19 | 3 | 3 | 0.3 | 0.1 | 0.4 | 0 | 0 | 0 | 0 |

| | | | | | | | | | | | | | |
|---|---|---|---|---|---|---|---|---|---|---|---|---|---|
| Underlined parts indicate that the sample is outside the scope of the invention or outside the preferred manufacture conditions. | | | | | | | | | | | | | |

**[Table 1D]**

| No | Grouping | Plating composition (mass%) | | | | | Adhesion amount | Manufacture conditions | η-Zn phase or Zn-containing phase or both | Performance | |
|---|---|---|---|---|---|---|---|---|---|---|---|
| | | C-group | | | other | | | | | Corrosion resistance after coating | Coating adhesion |
| | | Li | Y | Li+Y | Element | (mass%) | (g/m²) | Cooling gas atmosphere | | | |
| 31 | Comparison | 0 | 0 | 0 | | | 65 | N₂ (dew point 0°C) | ○ | A | B |
| 32 | Comparison | 0 | 0 | 0 | Cu | 0.01 | 43 | N₂ (dew point 0°C) | ○ | A | B |
| 33 | Comparison | 0 | 0 | 0 | | | 54 | N₂ (dew point 0°C) | ○ | A | B |
| 34 | Example | 0.3 | 0 | 0.3 | | | 56 | N₂ (dew point 0°C) | ○ | AA | A |
| 35 | Example | 0.02 | 0 | 0.02 | Ti | 0.001 | 55 | N₂ (dew point 0°C) | ○ | AA | A |
| 36 | Example | 0.00001 | 0 | 0.00001 | Bi | 0.004 | 66 | N₂ (dew point 0°C) | ○ | A | A |
| 37 | Example | 0 | 0.3 | 0.3 | | | 54 | N₂ (dew point 0°C) | ○ | AA | A |
| 38 | Example | 0 | 0.2 | 0.2 | | | 35 | N₂ (dew point 0°C) | ○ | AA | A |
| 39 | Example | 0 | 0.01 | 0.01 | B | 0.01 | 65 | N₂ (dew point 0°C) | ○ | AA | A |
| 40 | Example | 0 | 0.0001 | 0.0001 | | | 45 | N₂ (dew point 0°C) | ○ | A | A |
| 41 | Example | 0.2 | 0.1 | 0.3 | | | 54 | N₂ (dew point 0°C) | ○ | AA | A |
| 42 | Example | 0.1 | 0.05 | 0.15 | | | 53 | N₂ (dew point 0°C) | ○ | AA | A |
| 43 | Example | 0.005 | 0.01 | 0.015 | Co | 0.0002 | 41 | N₂ (dew point 0°C) | ○ | AA | A |
| 44 | Example | 0.00001 | 0.00001 | 0.00002 | Sn | 0.005 | 51 | N₂ (dew point 0°C) | ○ | A | A |
| 45 | Example | 0.2 | 0.1 | *0.3* | Sb | 0.01 | 54 | N₂ (dew point 0°C) | ○ | AA | A |
| 46 | Example | 0.1 | 0.1 | 0.2 | Pb | 0.002 | 35 | N₂ (dew point 0°C) | ○ | AA | A |
| 47 | Example | 0.2 | 0.06 | 0.26 | Cr | 0.002 | 65 | N₂ (dew point 0°C) | ○ | AA | A |
| 48 | Example | 0.1 | 0.1 | 0.2 | Nb | 0.005 | 45 | N₂ (dew point 0°C) | ○ | A | A |
| 49 | Example | 0.1 | 0.08 | 0.18 | Mn | 0.009 | 54 | N₂ (dew point 0°C) | ○ | AA | A |
| 50 | Example | 0.1 | 0.04 | 0.14 | Mo | 0.007 | 53 | N₂ (dew point 0°C) | ○ | AA | A |
| 51 | Example | 0.1 | 0.05 | 0.15 | Ag | 0.008 | 51 | N₂ (dew point 0°C) | ○ | AA | A |
| 52 | Comparison | 0 | 0 | 0 | Mn | 0.1 | 52 | N₂ (dew point 0°C) | ○ | A | B |
| 53 | Comparison | 0 | 0 | 0 | | | 43 | N₂ (dew point 0°C) | ○ | A | B |
| 54 | Comparison | 0 | 0 | 0 | | | 46 | N₂ (dew point 0°C) | ○ | A | B |
| 55 | Comparison | 0 | 0 | 0 | Nb | 0.01 | 59 | N₂ (dew point 0°C) | ○ | A | B |
| 56 | Comparison | 0 | 0 | 0 | | | 58 | N₂ (dew point 0°C) | ○ | A | B |
| 57 | Example | 0.2 | 0.1 | 0.3 | Ni | 0.0001 | 48 | N₂ (dew point 0°C) | ○ | AA | AA |
| 58 | Example | 0.01 | 0.1 | 0.11 | | | 59 | N₂ (dew point 0°C) | ○ | AA | AA |
| 59 | Example | 0.1 | 0.1 | 0.2 | | | 54 | N₂ (dew point 0°C) | ○ | AA | AA |

| | | | | | | | | | | | |
|---|---|---|---|---|---|---|---|---|---|---|---|
| Underlined parts indicate that the sample is outside the scope of the invention or outside the preferred manufacture conditions. | | | | | | | | | | | |

**[Table 1E]**

| No | Grouping | Plating composition (mass%) | | | | | | | | | | | |
|---|---|---|---|---|---|---|---|---|---|---|---|---|---|
| | | Zn | Al | Fe | Si | A-group | | | | B-group | | | |
| | | | | | | Mg | Ca | Sr | Ca+Sr | Zr | La | Ce | Total |
| 60 | Example | Remainder | 42 | 22 | 3 | 0.1 | 0.02 | 0.01 | 0.03 | 0 | 0 | 0 | 0 |
| 61 | Example | Remainder | 64 | 12 | 5 | 0.001 | 0.0001 | 0.0001 | 0.0002 | 0 | 0 | 0 | 0 |
| 62 | Example | Remainder | 0 | 30 | 2 | 14 | 5 | 0.4 | 5.4 | 0 | 0.0001 | 0.0001 | 0.0002 |
| 63 | Example | Remainder | 21 | 21 | 0 | 8 | 0.5 | 0.2 | 0.7 | 0.1 | 0.1 | 0.2 | 0.4 |
| 64 | Example | Remainder | 34 | 31 | 0 | 3 | 0.3 | 0.1 | 0.4 | 0.2 | 0.1 | 0.2 | 0.5 |
| 65 | Example | Remainder | 54 | 22 | 2 | 0.1 | 0.02 | 0.01 | 0.03 | 0.02 | 0.02 | 0.02 | 0.06 |
| 66 | Example | Remainder | 69 | 10 | 5 | 0.001 | 0.0001 | 0.0001 | 0.0002 | 0.0001 | 0.0001 | 0.0001 | 0.0003 |
| 67 | Comparison example | Remainder | 30 | 64 | 5 | 0 | 0 | 0 | 0 | 0 | 0 | 0 | 0 |
| 68 | Comparison example | Remainder | 10 | 82 | 5 | 0.0005 | 0.01 | 0 | 0.01 | 0 | 0 | 0 | 0 |
| 69 | Comparison example | Remainder | 10 | 67 | 5 | 16 | 0.01 | 0 | 0.01 | 0 | 0 | 0 | 0 |
| 70 | Comparison example | Remainder | 10 | 73 | 5 | 4 | 6 | 0 | 6 | 0 | 0 | 0 | 0 |
| 71 | Comparison example | Remainder | 20 | 65 | 5 | 3 | 0 | 5.5 | 5.5 | 0 | 0 | 0 | 0 |
| 72 | Comparison example | Remainder | 10 | 72 | 5 | 5 | 1 | 5 | 6 | 0 | 0 | 0 | 0 |
| 73 | Comparison example | Remainder | 10 | 84 | 5 | 0 | 0 | 0 | 0 | 0.7 | 0.01 | 0 | 0.71 |
| 74 | Comparison example | Remainder | 10 | 83 | 5 | 0 | 0 | 0 | 0 | 0.01 | 0.57 | 0 | 0.58 |
| 75 | Comparison example | Remainder | 10 | 84 | 5 | 0 | 0 | 0 | 0 | 0.05 | 0 | 0.62 | 0.67 |
| 76 | Comparison example | Remainder | 2 | 90 | 5 | 0 | 0 | 0 | 0 | 0.03 | 0.1 | 0.5 | 0.63 |
| 77 | Comparison example | Remainder | 10 | 83 | 5 | 0 | 0 | 0 | 0 | 0 | 0 | 0 | 0 |
| 78 | Comparison example | Remainder | 10 | 84 | 5 | 0 | 0 | 0 | 0 | 0 | 0 | 0 | 0 |
| 79 | Comparison example | Remainder | 10 | 84 | 5 | 0 | 0 | 0 | 0 | 0 | 0 | 0 | 0 |
| 80 | Comparison example | Remainder | 10 | 82 | 4 | 3 | 0.3 | 0.1 | 0.4 | 0 | 0 | 0 | 0 |
| 81 | Comparison example | Remainder | 10 | 83 | 5 | 0 | 0 | 0 | 0 | 0.1 | 0.1 | 0.01 | 0.21 |
| 82 | Comparison example | Remainder | 10 | 84 | 4 | 0 | 0 | 0 | 0 | 0 | 0 | 0 | 0 |
| 83 | Comparison example | Remainder | 10 | 83 | 5 | 0 | 0.3 | 0.1 | 0.4 | 0.1 | 0.1 | 0.01 | 0.21 |
| 84 | Comparison example | Remainder | 11 | 82 | 5 | 0 | 0.3 | 0.1 | 0.4 | 0.1 | 0.1 | 0.01 | 0.21 |
| 85 | Comparison example | Remainder | 10 | 82 | 5 | 0 | 0.3 | 0.1 | 0.4 | 0.1 | 0.1 | 0.01 | 0.21 |
| 86 | Comparison example | Remainder | 71 | 25 | 0 | 0.001 | 0.0001 | 0.0001 | 0.0002 | 0.0001 | 0.0001 | 0.0001 | 0.0003 |
| 87 | Comparison example | Remainder | 11 | 82 | 5 | 0 | 0 | 0 | 0 | 0 | 0 | 0 | 0 |

| | | | | | | | | | | | | | |
|---|---|---|---|---|---|---|---|---|---|---|---|---|---|
| Underlined parts indicate that the sample is outside the scope of the invention or outside the preferred manufacture conditions. | | | | | | | | | | | | | |

**[Table 1F]**

| No | Grouping | Plating composition (mass%) | | | | | Adhesion amount | Manufacture conditions | η-Zn phase or Zn-containing phase or both | Performance | |
|---|---|---|---|---|---|---|---|---|---|---|---|
| | | C-group | | | other | | | | | Corrosion resistance after coating | Coating adhesion |
| | | Li | Y | Li+Y | Element | (mass%) | (g/m²) | Cooling gas atmosphere | | | |
| 60 | Example | 0.02 | 0.01 | 0.03 | Bi | 0.001 | 84 | N₂ (dew point 0°C) | ○ | AA | AA |
| 61 | Example | 0.0001 | 0.0001 | 0.0002 | | | 59 | N₂ (dew point 0°C) | ○ | A | AA |
| 62 | Example | 0.2 | 0.1 | 0.3 | | | 45 | N₂ (dew point 0°C) | ○ | AA | AA |
| 63 | Example | 0.01 | 0.1 | 0.11 | Cu | 0.01 | 45 | N₂ (dew point 0°C) | ○ | AA | AA |
| 64 | Example | 0.2 | 0.1 | 0.3 | | | 39 | N₂ (dew point 0°C) | ○ | AA | AA |
| 65 | Example | 0.02 | 0.01 | 0.03 | | | 81 | N₂ (dew point 0°C) | ○ | AA | AA |
| 66 | Example | 0.0001 | 0.0001 | 0.0002 | Ti | 0.001 | 51 | N₂ (dew point 0°C) | ○ | A | AA |
| 67 | Comparison | 0 | 0 | 0 | | | 71 | N₂ (dew point 0°C) | × | B | B |
| 68 | Comparison | 0 | 0 | 0 | | | 35 | N₂ (dew point 0°C) | × | B | B |
| 69 | Comparison | 0 | 0 | 0 | | | 66 | N₂ (dew point 0°C) | × | B | B |
| 70 | Comparison | 0 | 0 | 0 | | | 46 | N₂ (dew point 0°C) | × | B | B |
| 71 | Comparison | 0 | 0 | 0 | | | 44 | N₂ (dew point 0°C) | × | B | B |
| 72 | Comparison | 0 | 0 | 0 | | | 56 | N₂ (dew point 0°C) | × | B | B |
| 73 | Comparison | 0 | 0 | 0 | | | 43 | N₂ (dew point 0°C) | × | B | B |
| 74 | Comparison | 0 | 0 | 0 | | | 56 | N₂ (dew point 0°C) | × | B | B |
| 75 | Comparison | 0 | 0 | 0 | | | 45 | N₂ (dew point 0°C) | × | B | B |
| 76 | Comparison | 0 | 0 | 0 | | | 35 | N₂ (dew point 0°C) | × | B | B |
| 77 | Comparison | 0.65 | 0 | 0.65 | | | 71 | N₂ (dew point 0°C) | × | B | B |
| 78 | Comparison | 0 | 0.56 | 0.56 | | | 55 | N₂ (dew point 0°C) | × | B | B |
| 79 | Comparison | 0.4 | 0.2 | 0.6 | | | 65 | N₂ (dew point 0°C) | × | B | B |
| 80 | Comparison | 0 | 0 | 0 | | | 24 | N₂(dew point -40°C) | × | B | B |
| 81 | Comparison | 0 | 0 | 0 | | | 55 | N₂(dew point -40°C) | × | B | B |
| 82 | Comparison | 0.3 | 0.1 | 0.4 | | | 45 | N₂(dew point -40°C) | × | B | B |
| 83 | Comparison | 0 | 0 | 0 | | | 45 | N₂(dew point -40°C) | × | B | B |
| 84 | Comparison | 0.4 | 0.2 | 0.6 | | | 65 | N₂(dew point -40°C) | × | B | B |
| 85 | Comparison | 0.4 | 0.2 | 0.6 | | | 65 | Atmosphere | × | B | B |
| 86 | Comparison | 0.0001 | 0.0001 | 0.0002 | | | 59 | Atmosphere | × | B | B |
| 87 | Comparison example | 0 | 0 | 0 | Deposition of Y on plated layer | | 65 | N₂(dew point -40°C) | × | B | B |

| | | | | | | | | | | | |
|---|---|---|---|---|---|---|---|---|---|---|---|
| Underlined parts indicate that the sample is outside the scope of the invention or outside the preferred manufacture conditions. | | | | | | | | | | | |

## Claims

1. A hot stamped body, comprising:
a steel material; and a plated layer,
wherein a chemical composition of the plated layer contains, in mass%,
0 to 70% of Al,
10 to 60% of Fe,
0 to 20% of Si, and
C-group element being any one kind or two kinds of Li and Y, with a content of 0.00001 to 0.3% in total,
further contains 0 to 5% in total of any one kind or two or more kinds of:
0 to 0.5% of Sb;
0 to 0.5% of Pb;
0 to 0.5% of B;
0 to 1.0% of Cu;
0 to 1.0% of Ti;
0 to 1.0% of Cr;
0 to 1.0% of Nb;
0 to 1.0% of Ni;
0 to 1.0% of Mn;
0 to 1.0% of Mo;
0 to 1.0% of Ag;
0 to 1.0% of Co;
0 to 1.0% of Sn; and
0 to 1.0% of Bi, and
optionally one kind or two kinds of A-group elements and B-group elements, wherein
the A-group element is 0.0010 to 15% of Mg and any one kind or two kinds of Ca or Sr, the content of which is 0.0001% or more and less than 5.5% in total, and
the B-group element is any one kind or two or more kinds of Zr, La, and Ce, the content of which is 0.0001 to 0.5% in total, and
a remainder being of Zn and an impurity,
wherein the plated layer contains an η-Zn phase or a Zn-containing phase, wherein the presence of the η-Zn phase or the Zn-containing phase is confirmed as outlined in the description.

2. The hot stamped body according to claim 1, wherein the chemical composition of the plated layer contains one kind or two kinds of A-group elements and B-group elements, wherein
the A-group element is 0.0010 to 15% of Mg and any one kind or two kinds of Ca or Sr, the content of which is 0.0001% or more and less than 5.5% in total,
the B-group element is any one kind or two or more kinds of Zr, La, and Ce, the content of which is 0.0001 to 0.5% in total.

3. The hot stamped body according to claim 1 or 2, wherein the total amount of the C-group element is 0.001 to 0.3%.

4. The hot stamped body according to claim 1 or 2, wherein the Mg content in the A-group element is 1 to 15%.

## Patentansprüche

1. Ein warmumgeformter Körper, umfassend:
ein Stahlmaterial; und eine Plattierungsschicht,
wobei eine chemische Zusammensetzung der Plattierungsschicht enthält, in Massen-%,
0 bis 70% Al,
10 bis 60% Fe,
0 bis 20% Si, und
C-Gruppen-Element, welches eine Art oder zwei Arten von Li und Y ist, mit einem Gehalt von insgesamt 0,00001 bis 0,3%,
ferner insgesamt 0 bis 5% von einer Art oder zwei oder mehr Arten enthält von:
0 bis 0,5% Sb;
0 bis 0,5% Pb;
0 bis 0,5% B;
0 bis 1,0% Cu;
0 bis 1,0% Ti;
0 bis 1,0% Cr;
0 bis 1,0% Nb;
0 bis 1,0% Ni;
0 bis 1,0% Mn;
0 bis 1,0% Mo;
0 bis 1,0% Ag;
0 bis 1,0% Co;
0 bis 1,0% Sn; und
0 bis 1,0% Bi, und
gegebenenfalls eine Art oder zwei Arten von A-Gruppen-Elementen und B-Gruppen-Elementen, wobei
das A-Gruppen-Element 0,0010 bis 15% Mg ist und eine Art oder zwei Arten von Ca oder Sr, deren Gehalt insgesamt 0,0001% oder mehr und weniger als 5,5% beträgt, und
das B-Gruppen-Element eine Art oder zwei oder mehr Arten von Zr, La und Ce ist, deren Gehalt insgesamt 0,0001% bis 0,5% beträgt, und
einen Rest, bestehend aus Zn und einer Verunreinigung,
wobei die Plattierungsschicht eine η-Zn-Phase oder eine Zn enthaltende Phase enthält, wobei das Vorhandensein der η-Zn-Phase oder der Zn enthaltenden Phase wie in der Beschreibung dargelegt bestätigt wird.

2. Der warmumgeformte Körper gemäß Anspruch 1, wobei die chemische Zusammensetzung der Plattierungsschicht eine Art oder zwei Arten von A-Gruppen-Elementen und B-Gruppen-Elementen enthält, wobei
das A-Gruppen-Element 0,0010 bis 15% Mg ist und eine Art oder zwei Arten von Ca oder Sr, deren Gehalt insgesamt 0,0001% oder mehr und weniger als 5,5% beträgt,
das B-Gruppen-Element eine Art oder zwei oder mehr Arten von Zr, La und Ce ist, deren Gehalt insgesamt 0,0001% bis 0,5% beträgt.

3. Der warmumgeformte Körper gemäß Anspruch 1 oder 2, wobei die Gesamtmenge des C-Gruppen-Elements 0,001 bis 0,3% beträgt.

4. Der warmumgeformte Körper gemäß Anspruch 1 oder 2, wobei der Mg-Gehalt in dem A-Gruppen-Element 1 bis 15% beträgt.

## Revendications

1. Corps estampé à chaud comprenant :
un matériau en acier ; et une couche plaquée,
dans lequel la composition chimique de la couche plaquée contient, en % en masse,
0 à 70 % d'Al,
10 à 60 % de Fe,
0 à 20 % de Si, et
un élément du groupe C qui est un ou deux quelconques parmi Li et Y, en une teneur de 0,00001 à 0,3 % au total,
contient en outre 0 à 5 % au total d'un ou deux ou plusieurs quelconques parmi :
0 à 0,5 % de Sb ;
0 à 0,5 % de Pb ;
0 à 0,5 % de B ;
0 à 1,0 % de Cu ;
0 à 1,0 % de Ti ;
0 à 1,0 % de Cr ;
0 à 1,0 % de Nb ;
0 à 1,0 % de Ni ;
0 à 1,0 % de Mn ;
0 à 1,0 % de Mo ;
0 à 1,0 % d'Ag ;
0 à 1,0 % de Co ;
0 à 1,0 % de Sn ; et
0 à 1,0 % de Bi, et
éventuellement un ou deux éléments du groupe A et éléments du groupe B, dans lequel
l'élément du groupe A est 0,0010 à 15 % de Mg et un ou deux quelconques parmi Ca et Sr, dont la teneur est de 0,0001 % ou plus et inférieure à 5,5 % au total, et
l'élément du groupe B est un ou deux ou plusieurs quelconques parmi Zr, La et Ce, dont la teneur est de 0,0001 à 0,5 % au total, et
le reste étant du Zn et des impuretés,
dans lequel la couche plaquée contient une phase de η-Zn ou une phase contenant du Zn, dans lequel la présence de la phase de η-Zn ou de la phase contenant du Zn est confirmée comme indiqué dans la description.

2. Corps estampé à chaud selon la revendication 1, dans lequel la composition chimique de la couche plaquée contient un ou deux éléments du groupe A et éléments du groupe B, dans lequel
l'élément du groupe A est 0,0010 à 15 % de Mg et un ou deux quelconques parmi Ca et Sr, dont la teneur est de 0,0001 % ou plus et inférieure à 5,5 % au total,
l'élément du groupe B est un ou deux ou plusieurs quelconques parmi Zr, La et Ce, dont la teneur est de 0,0001 à 0,5 % au total.

3. Corps estampé à chaud selon la revendication 1 ou 2, dans lequel la quantité totale de l'élément du groupe C est de 0,001 à 0,3 %.

4. Corps estampé à chaud selon la revendication 1 ou 2, dans lequel la teneur en Mg dans l'élément du groupe A est de 1 à 15 %.
